# EUROPEAN PATENT APPLICATION

(11) **EP 4 365 646 A1**
(43) Date of publication of application: **08.05.2024**
(21) Application number: 22833163.3
(22) Date of filing: 28.06.2022
(51) Int. Cl.: G02B 6/12, C08G 59/24

(54) **COMPOSITION FOR FORMING OPTICAL WAVEGUIDE**

(30) Priority: 30.06.2021 JP 2021109192
(71) Applicant: Nissan Chemical Corporation, Tokyo 103-6119 (JP)
(72) Inventor: KASHINO, Tsubasa, Funabashi-shi, Chiba 274-0052 (JP); HIRATA, Osamu, Funabashi-shi, Chiba 274-0052 (JP); OSHIMA, Juro, Funabashi-shi, Chiba 274-0052 (JP)
(74) Representative: Hoffmann Eitle
(86) International application number: PCT/JP2022/025764
(87) International publication number: WO 2023/277016

(57) **Abstract**

[Problem] To provide a composition which can resolve the conflicting relationship between patternability, film formability, and high refractive index required for an optical waveguide-forming composition, and which can satisfy these requirements.

[Solution] An optical waveguide-forming composition comprising: a fluorene skeleton-containing epoxy compound (A) of the following Formula [1]: 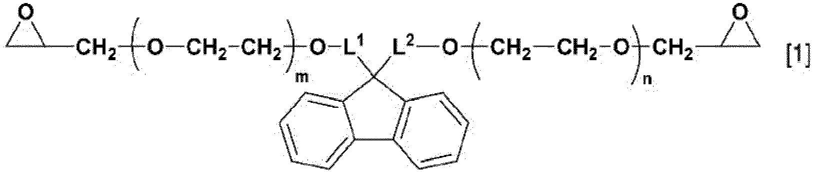 (in Formula [1], L¹ and L² are each independently a naphthalenediyl group possibly having a substituent; and m and n are each independently an integer of 0 to 10); a monofunctional or bifunctional alicyclic epoxy compound (B); a monofunctional or bifunctional aromatic epoxy compound (C) different from the compound (A); and a photoacid generator (D), and an optical waveguide comprising a cured product of the optical waveguide-forming composition.

## Description

### TECHNICAL FIELD

The present invention relates to an optical waveguide-forming composition, in particular, an epoxy resin composition, and also relates to an optical waveguide formed from the composition.

### BACKGROUND ART

The term "optical waveguide" refers broadly to a transmission path using light for communication. Currently, an optical fiber formed of quartz glass or plastic is already in practical use as a transmission path for transmitting light over long distances, and such an optical fiber is essential for high-speed and high-accuracy transmission in communications.

A transmission path that transmits light inside an optical circuit and is formed on a substrate by microfabrication technology is conventionally referred to as an optical waveguide, and studies have been conducted on such a transmission path (hereinafter the transmission path will be referred to as "optical waveguide"). In order to achieve faster communication, practical applications have been made for so-called optical interconnect, wherein electrical signals by metal wiring transmission paths, which have been used for relatively short distance transmission within a package substrate or between devices, are being converted into optical signals directly from CPUs or LSIs, and the optical signals are transmitted from the substrate through an optical waveguide.

In recent years, a proposal has been made for an organic polymer optical waveguide formed from a photosensitive material by a photolithographic technology, and an attention has been paid to a technology for completing wiring in a package substrate by using the photolithographic technology in all processes for forming an under-cladding layer (i.e., underlying layer), a core layer as an optical waveguide portion, and a top cladding layer covering the core layer.

The photosensitive material for forming the optical waveguide is required to have high refractive index, as well as film formability (e.g., film planarity) and patternability for forming a fine optical waveguide on a substrate. In addition, the photosensitive material is required to have such stability that it does not cause a precipitate or phase separation.

There has been proposed, as the aforementioned photosensitive material for forming the optical waveguide, an optical waveguide-forming photosensitive epoxy resin composition containing resin components; i.e., a polyfunctional epoxy resin having a bisphenol A skeleton, a solid semi-aliphatic bifunctional epoxy resin, and another bifunctional epoxy resin, and also containing a photocationic polymerization initiator (see, for example, Patent Document 1).

### Prior Art Documents

### Patent Documents

Patent Document 1: JP 2020-20927 A

### SUMMARY OF THE INVENTION

### Problems to be Solved by the Invention

As described above, the optical waveguide-forming photosensitive material is required to have patternability, film formability, and high refractive index. However, difficulty is encountered in satisfying these requirements at the same time.

For example, when a polyfunctional resin or compound is used for improving patternability, an increase in molecular weight leads to a considerable increase in the viscosity of the material, which may result in impairment of film formability or film planarity. When, for example, a monofunctional or bifunctional resin or compound or a low-molecular-weight compound is used for reducing the viscosity of the material so as to improve film formability, refractive index may be reduced, and patternability may be impaired. When a high-density compound (e.g., a compound containing an aromatic ring) is used for increasing refractive index, the rigidity or high density of the compound causes deterioration of the compatibility of the compound with another component (e.g., resin or compound), which may result in the production of a precipitate and may adversely affect film formability.

For example, Patent Document 1 describes evaluation of patternability, and an increase in refractive index. However, the patent document does not describe an improvement in storage stability or film formability by using a high-molecular-weight component. Thus, according to the patent document, all the conflicting relationships have not yet been resolved.

As described above, an improvement in patternability, an improvement in film formability, and an increase in refractive index are in trade-off relationship. It has not been reported so far that all these requirements are satisfied by the technologies proposed in, for example, the aforementioned document.

An object of the present invention is to provide a composition which can resolve the conflicting relationship between patternability, film formability, and high refractive index required for an optical waveguide-forming composition, and which can satisfy these requirements.

### Means for Solving the Problems

The present inventors have conducted extensive studies for solving the aforementioned problems, and as a result have found that a composition containing at least three epoxy compounds (i.e., a bifunctional fluorene epoxy compound containing a naphthalene ring, a monofunctional or bifunctional alicyclic epoxy compound, and a monofunctional or bifunctional aromatic epoxy compound other than the aforementioned fluorene epoxy compound) can solve the aforementioned problems. The present invention has been accomplished on the basis of this finding.

Accordingly, a first aspect of the present invention is an optical waveguide-forming composition comprising:
a fluorene skeleton-containing epoxy compound (A) of the following Formula [1]: 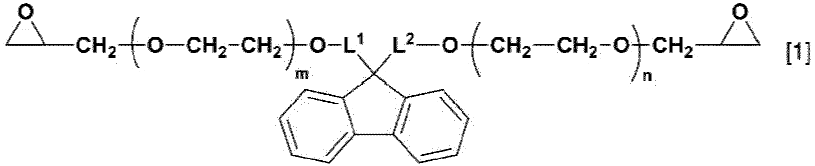 (in Formula [1],
L¹ and L² are each independently a naphthalenediyl group possibly having a substituent; and
m and n are each independently an integer of 0 to 10);
a monofunctional or bifunctional alicyclic epoxy compound (B);
a monofunctional or bifunctional aromatic epoxy compound (C) different from the compound (A); and
a photoacid generator (D).

A second aspect of the present invention is the optical waveguide-forming composition according to the first aspect, wherein the alicyclic epoxy compound (B) is a liquid alicyclic epoxy compound.

A third aspect of the present invention is the optical waveguide-forming composition according to the first or second aspect, wherein the aromatic epoxy compound (C) is a bifunctional aromatic epoxy compound.

A fourth aspect of the present invention is the optical waveguide-forming composition according to any of the first to third aspects, wherein the alicyclic epoxy compound (B) is a bifunctional alicyclic epoxy compound, and the aromatic epoxy compound (C) is a bifunctional aromatic epoxy compound.

A fifth aspect of the present invention is the optical waveguide-forming composition according to any of the first to fourth aspects, wherein the alicyclic epoxy compound (B) is a compound of the following Formula [2]: 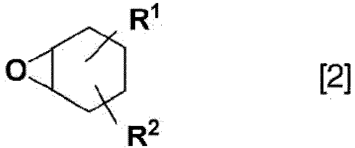 (in Formula [2], R¹ and R² are each independently a hydrogen atom, a linear or branched alkyl group having a carbon atom number of 1 to 6 or a cyclic alkyl group having a carbon atom number of 3 to 6, which possibly has an ester group or an ether group, or a combination of the linear or branched alkyl group and the cyclic alkyl group, wherein the linear alkyl group having a carbon atom number of 2 or more, the branched alkyl group having a carbon atom number of 3 or more, or the cyclic alkyl group possibly forms an epoxy ring together with the adjacent carbon atom, or

R¹ and R² are possibly bonded together to form a C₄₋₆ ring, and possibly form an epoxy ring together with the adjacent carbon atom forming the C₄₋₆ ring).

A sixth aspect of the present invention is the optical waveguide-forming composition according to any of the first to fifth aspects, wherein the aromatic epoxy compound (C) is an epoxy compound having a bisphenol A skeleton or a bisphenol F skeleton.

A seventh aspect of the present invention is the optical waveguide-forming composition according to any of the first to sixth aspects, wherein the fluorene skeleton-containing epoxy compound (A) is a compound of the following Formula [3].

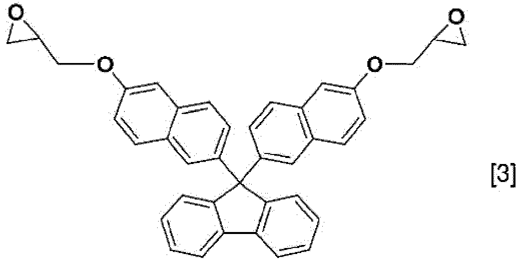

An eighth aspect of the present invention is the optical waveguide-forming composition according to any of the first to seventh aspects, wherein the alicyclic epoxy compound (B) is at least one of compounds of the following Formulae [4], [5], and [6].

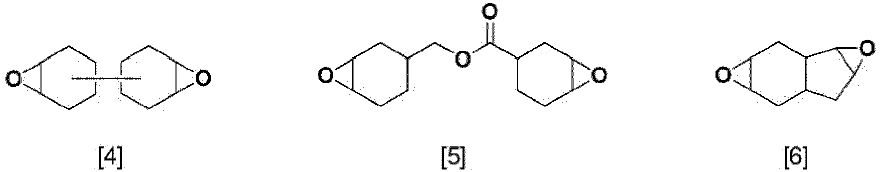

A ninth aspect of the present invention is a cured product, which is a polymerized product of the optical waveguide-forming composition according to any of the first to eighth aspects.

A tenth aspect of the present invention is an optical waveguide comprising a cured product of the optical waveguide-forming composition according to any of the first to eighth aspects.

An eleventh aspect of the present invention is the optical waveguide according to claim 10, wherein the optical waveguide comprises a cladding layer formed of a cured product of the optical waveguide-forming composition according to any of the first to eighth aspects.

### Effects of the Invention

The optical waveguide-forming composition of the present invention achieves a high refractive index of 1.54 or more, good film formability without causing unevenness, phase separation, or aggregates, high patternability, and high storage stability, and can produce a cured product useful as an optical waveguide-forming material.

The optical waveguide-forming composition of the present invention has such a viscosity that it can be satisfactorily handled even in the absence of a solvent. Thus, the optical waveguide-forming composition can be provided as an optical waveguide-forming material that does not require an additional process of solvent addition and does not cause, for example, health hazards or corrosion to surrounding facilities due to a solvent.

### BRIEF DESCRIPTION OF THE DRAWINGS

[FIG. 1] FIG. 1 shows a micrograph of a cured film formed from the composition of Example 1 by photolithography, as observed with a microscope from an end surface of the film.
[FIG. 2] FIG. 2 shows a micrograph of a cured film formed from the composition of Comparative Example 2 by photolithography, as observed with a microscope from an end surface of the film.

### MODES FOR CARRYING OUT THE INVENTION

### «Optical Waveguide-Forming Composition»

The optical waveguide-forming composition of the present invention contains a fluorene skeleton-containing epoxy compound (A), a monofunctional or bifunctional alicyclic epoxy compound (B), a monofunctional or bifunctional aromatic epoxy compound (C) different from the compound (A), and a photoacid generator (D).

As used herein, the aforementioned epoxy compounds (A) to (C) and an additional epoxy compound described below may be collectively referred to as "resin components," and the term "monofunctional or bifunctional" refers to the case where each of the epoxy compounds contains one or two epoxy groups as a functional group.

### [Fluorene Skeleton-Containing Epoxy Compound (A)]

The fluorene skeleton-containing epoxy compound (A) used in the present invention is a compound of the following Formula [1].

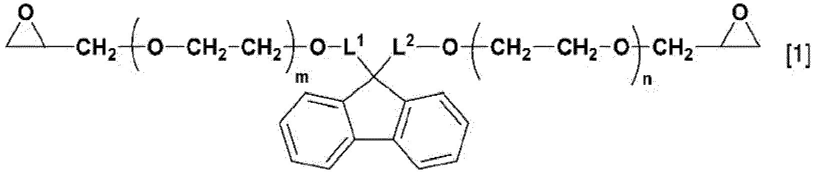

In Formula [1], L¹ and L² are each independently a naphthalenediyl group that may have a substituent, and m and n are each independently an integer of 0 to 10.

Examples of the substituent of the naphthalenediyl group (on the naphthalene ring) represented by each of L¹ and L² include C₁₋₆ alkyl groups such as methyl group, ethyl group, propyl group, isopropyl group, butyl group, and t-butyl group.

The number of substituents of the naphthalenediyl group represented by each of L¹ and L² is 0 to 6, preferably 0 to 2, more preferably 0 or 1, the most preferably 0.

The substituents of the naphthalenediyl groups of L¹ and L² may be identical to or different from one another. When the same naphthalene ring has two or more substituents, the substituents may be identical to or different from one another.

The fluorene skeleton-containing epoxy compound (A) is preferably a compound of the following Formula [3].

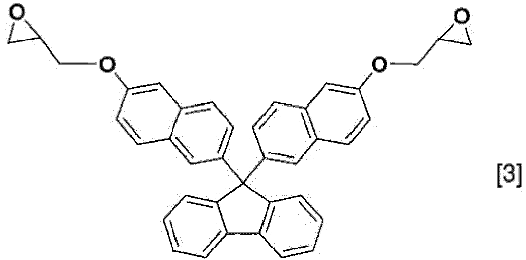

The aforementioned fluorene skeleton-containing epoxy compound (A) may be a commercially available product; for example, OGSOL (registered trademark) CG-500 or EG-280 (available from Osaka Gas Chemicals Co., Ltd.).

These fluorene skeleton-containing epoxy compounds having a naphthalene ring may be used alone or in combination of two or more species. From the viewpoint of the solubility of the resin components or refractive index, for example, the aforementioned OGSOL (registered trademark) CG-500 may be used alone.

The fluorene skeleton-containing epoxy compound (A) is preferably contained in an amount of, for example, 5 parts by mass to 50 parts by mass, more preferably 10 parts by mass to 40 parts by mass, relative to the total amount (100 parts by mass in total) of the epoxy compounds. An excessively small amount of the incorporated fluorene skeleton-containing epoxy compound (A) leads to difficulty in achieving sufficient refractive index, whereas an excessively large amount of the epoxy compound (A) causes deterioration of storage stability or film formability due to precipitation.

### [Monofunctional or Bifunctional Alicyclic Epoxy Compound (B)]

No particular limitation is imposed on the monofunctional or bifunctional alicyclic epoxy compound (B) used in the present invention, so long as the compound has one or two alicyclic epoxy groups. In a preferred embodiment, the aforementioned alicyclic epoxy compound (B) is in the form of liquid. From the viewpoint of patternability (exposure sensitivity), the alicyclic epoxy compound (B) may be a compound having two epoxy groups introduced into an alicyclic skeleton.

The aforementioned alicyclic epoxy compound (B) may be, for example, a compound of the following Formula [2].

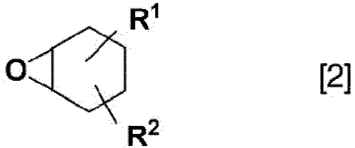

In Formula [2], R¹ and R² are each independently a hydrogen atom, a linear or branched alkyl group having a carbon atom number of 1 to 6 or a cyclic alkyl group having a carbon atom number of 3 to 6, which may have an ester group or an ether group, or a combination of the linear or branched alkyl group and the cyclic alkyl group, wherein the linear alkyl group having a carbon atom number of 2 or more, the branched alkyl group having a carbon atom number of 3 or more, or the cyclic alkyl group may form an epoxy ring together with the adjacent carbon atom, or R¹ and R² may be bonded together to form a C₄₋₆ ring, and may form an epoxy ring together with the adjacent carbon atom forming the C₄₋₆ ring.

Examples of the linear or branched alkyl group having a carbon atom number of 1 to 6 include methyl group, ethyl group, n-propyl group, isopropyl group, n-butyl group, isobutyl group, sec-butyl group, tert-butyl group, n-pentyl group, 1-methylbutyl group, 2-methylbutyl group, 3-methylbutyl group, 1,1-dimethylpropyl group, 1,2-dimethylpropyl group, 2,2-dimethylpropyl group, 1-ethylpropyl group, n-hexyl group, 1-methylpentyl group, 2-methylpentyl group, 3-methylpentyl group, 4-methylpentyl group, 1,1-dimethylbutyl group, 1,2-dimethylbutyl group, 1,3-dimethylbutyl group, 2,2-dimethylbutyl group, 2,3-dimethylbutyl group, 3,3-dimethylbutyl group, 1-ethylbutyl group, 2-ethylbutyl group, 1,1,2-trimethylpropyl group, 1,2,2-trimethylpropyl group, 1-ethyl-1-methylpropyl group, and 1-ethyl-2-methylpropyl group.

Examples of the cyclic alkyl group having a carbon atom number of 3 to 6 include cyclopropyl group, cyclobutyl group, cyclopentyl group, and cyclohexyl group.

In a preferred embodiment, the aforementioned alicyclic epoxy compound (B) may be a compound of the following Formula [4], [5], or [6]. These compounds have a low molecular weight and are in the form of liquid, and are preferred from the viewpoints of patternability and adjustment of the viscosity of the composition.

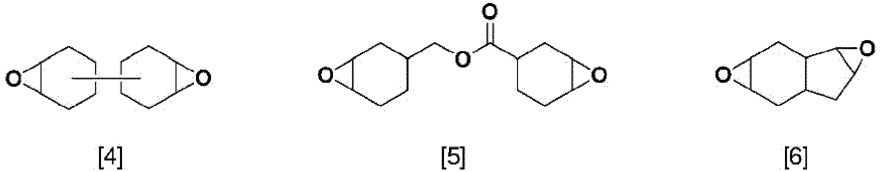

The aforementioned alicyclic epoxy compound (B) may be a commercially available product.

Examples of the bifunctional alicyclic epoxy compound (B) include diepoxybicyclohexyl (e.g., CELLOXIDE (registered trademark) 8000 and 8010, available from Daicel Corporation), 3,4-epoxycyclohexylmethyl-3',4'- epoxycyclohexane carboxylate (e.g., CELLOXIDE (registered trademark) 2021P, available from Daicel Corporation), ε-caprolactone-modified 3,4-epoxycyclohexylmethyl 3',4'-epoxycyclohexane carboxylate (e.g., CELLOXIDE (registered trademark) 2081, available from Daicel Corporation), bis(3,4-epoxycyclohexylmethyl) adipate, and diepoxidated tetrahydroindene (e.g., EPOCHALIC (registered trademark) THI-DE, available from ENEOS Corporation).

Examples of the usable monofunctional alicyclic epoxy compound include 3,4-epoxycyclohexylmethyl methacrylate (e.g., CYCLOMER (registered trademark) M-100, available from Daicel Corporation), 3,4-epoxycyclohexylmethyl methacrylate, 1,2-epoxy-4-vinylcyclohexane (e.g., CELLOXIDE (registered trademark) 2000, available from Daicel Corporation), and 1,2,8,9-diepoxylimonene (e.g., CELLOXIDE (registered trademark) 3000, available from Daicel Corporation).

The alicyclic epoxy compound (B) is preferably contained in an amount of, for example, 10 parts by mass to 80 parts by mass, more preferably 20 parts by mass to 70 parts by mass, relative to the total amount (100 parts by mass in total) of the epoxy compounds. An excessively small amount of the incorporated alicyclic epoxy compound (B) leads to difficulty in achieving sufficient patternability, whereas an excessively large amount of the alicyclic epoxy compound (B) leads to difficulty in achieving sufficient refractive index.

### [Monofunctional or Bifunctional Aromatic Epoxy Compound (C)]

The composition of the present invention also contains a monofunctional or bifunctional aromatic epoxy compound (C) different from the aforementioned epoxy compound (A). In a preferred embodiment, the aromatic epoxy compound (C) may be a compound having two epoxy groups from the viewpoint of patternability (exposure sensitivity). In particular, the aromatic epoxy compound (C) is preferably an epoxy compound having a bisphenol A skeleton or a bisphenol F skeleton.

The aromatic epoxy compound (C) may be a commercially available product.

Examples of the bifunctional aromatic epoxy compound (C) include jER (registered trademark) 806, which is a bisphenol F-type epoxy compound (available from Mitsubishi Chemical Corporation) and jER (registered trademark) 828, which is a bisphenol A-type epoxy compound (available from Mitsubishi Chemical Corporation).

Examples of the monofunctional aromatic epoxy compound (C) include phenyl glycidyl ether (e.g., DENACOL (registered trademark) EX-141, available from Nagase ChemteX Corporation), phenol (EO)5 glycidyl ether (e.g., DENACOL (registered trademark) EX-145, available from Nagase ChemteX Corporation), and p-tert-butylphenyl glycidyl ether (e.g., DENACOL (registered trademark) EX-146, available from Nagase ChemteX Corporation).

The aromatic epoxy compound (C) is preferably contained in an amount of, for example, 5 parts by mass to 60 parts by mass, more preferably 10 parts by mass to 50 parts by mass, relative to the total amount (100 parts by mass in total) of the epoxy compounds. An excessively small amount of the incorporated aromatic epoxy compound (C) leads to difficulty in achieving sufficient refractive index and forming a homogeneous film, whereas an excessively large amount of the aromatic epoxy compound (C) leads to difficulty in achieving sufficient patternability.

### [Additional Epoxy Compound]

The optical waveguide-forming composition of the present invention may contain an additional epoxy compound besides the aforementioned epoxy compounds (A) to (C), so long as the effects of the present invention are not impaired.

Examples of the additional epoxy compound include a heteroring-containing epoxy compound such as triglycidyl isocyanurate, and an aliphatic epoxy compound.

Specific examples of the aliphatic epoxy compound include monofunctional epoxy compounds such as a glycidyl-etherified product of an aliphatic alcohol and a glycidyl ester of an alkylcarboxylic acid, and a polyglycidyl-etherified product of an aliphatic polyhydric alcohol or an alkylene oxide adduct thereof. Specific examples of typical compounds of these products include allyl glycidyl ether; glycidyl ethers of monohydric alcohols, such as butyl glycidyl ether, 2-ethylhexyl glycidyl ether, and C₁₂₋₁₃ mixed alcohol glycidyl ether; glycidyl ethers of polyhydric alcohols, such as 1,4-butanediol diglycidyl ether, 1,6-hexanediol diglycidyl ether, glycerin triglycidyl ether, trimethylolpropane triglycidyl ether, sorbitol tetraglycidyl ether, dipentaerythritol hexaglycidyl ether, polyethylene glycol diglycidyl ether, and polypropylene glycol diglycidyl ether; and polyglycidyl-etherified products of polyether polyols, which are alkylene oxide adducts of one or more aliphatic polyhydric alcohols such as propylene glycol, trimethylolpropane, and glycerin.

Such an additional epoxy compound may be contained in an amount of, for example, 0 to 20 parts by mass relative to the total amount (100 parts by mass in total) of the epoxy compounds.

### [Photoacid Generator (D)]

The optical waveguide-forming composition of the present invention contains a photoacid generator (D).

Specific examples of the photoacid generator (D) include onium salts such as an iodonium salt, a sulfonium salt, a phosphonium salt, and a selenium salt, a metallocene complex compound, an iron arene complex compound, a disulfone compound, a sulfonic acid derivative compound, a triazine compound, an acetophenone derivative compound, and a diazomethane compound.

Examples of the iodonium salt among the aforementioned onium salts include diaryliodonium salts, such as chloride, bromide, mesylate, tosylate, trifluoromethanesulfonate, tetrafluoroborate, tetrakis(pentafluorophenyl)borate, hexafluorophosphate, hexafluoroarsenate, and hexafluoroantimonate of diaryliodonium such as diphenyliodonium, 4,4'-dichlorodiphenyliodonium, 4,4'-dimethoxydiphenyliodonium, 4,4'-di-tert-butyldiphenyliodonium, 4-methylphenyl(4-(2-methylpropyl)phenyl)iodonium, 3,3'-dinitrophenyliodonium, 4-(1-ethoxycarbonylethoxy)phenyl(2,4,6-trimethylphenyl)iodonium, or 4-methoxyphenyl(phenyl)iodonium.

Examples of the aforementioned sulfonium salt include triarylsulfonium salts, such as chloride, bromide, trifluoromethanesulfonate, tetrafluoroborate, hexafluorophosphate, hexafluoroarsenate, and hexafluoroantimonate of triarylsulfonium such as triphenylsulfonium, diphenyl(4-tert-butylphenyl)sulfonium, tris(4-tert-butylphenyl)sulfonium, diphenyl(4-methoxyphenyl)sulfonium, tris(4-methylphenyl)sulfonium, tris(4-methoxyphenyl)sulfonium, tris(4-ethoxyphenyl)sulfonium, diphenyl(4-(phenylthio)phenyl)sulfonium, or tris(4-(phenylthio)phenyl)sulfonium.

Examples of the aforementioned phosphonium salt include arylphosphonium salts, such as chloride, bromide, tetrafluoroborate, hexafluorophosphate, and hexafluoroantimonate of triarylphosphonium or tetraarylphosphonium such as tetraphenylphosphonium, ethyltriphenylphosphonium, tetra(p-methoxyphenyl)phosphonium, ethyltri(p-methoxyphenyl)phosphonium, or benzyltriphenylphosphonium.

Examples of the aforementioned selenium salt include triarylselenium salts such as triphenylselenium hexafluorophosphate.

Examples of the aforementioned iron arene complex compound include bis(η5-cyclopentadienyl)(η6-isopropylbenzene)iron(II) hexafluorophosphate.

Among these, an iodonium salt, a sulfonium salt, etc. are preferably used as a photoacid generator. The photoacid generator may be a commercially available product; for example, a triarylsulfonium salt such as CPI-310FG or CPI-101A.

These photoacid generators (D) may be used alone or in combination of two or more species.

In general, the photoacid generator (D) is preferably contained in an amount of, for example, 0.1 parts by mass to 10 parts by mass, more preferably 0.2 parts by mass to 5 parts by mass, relative to 100 parts by mass of the total mass of the aforementioned epoxy compounds (resin components). An amount of less than 0.1 parts by mass of the incorporated photoacid generator (D) may cause insufficient progress of a photocuring reaction, whereas an amount of more than 10 parts by mass of the photoacid generator (D) may cause a reduction in the degree of polymerization of a polymer, which makes the polymer brittle and prone to cracking.

### [Organic Solvent]

The optical waveguide-forming composition of the present invention may contain an organic solvent.

In the case where the prepared composition has a low viscosity, an organic solvent is not required to be added to the composition, and the composition enables excellent formation of a film. In this case, the composition containing no solvent is advantageous in that an additional process is not required for evaporating an organic solvent by thermal treatment, etc. after film formation. No incorporation of an organic solvent can considerably reduce concerns that may occur during evaporation of the organic solvent, for example, health hazards caused by inhalation of the solvent by workers, and corrosion to surrounding facilities.

Since the optical waveguide-forming composition of the present invention has a relatively low viscosity, incorporation of an organic solvent into the composition is not essential. However, an organic solvent may be added to the composition in any amount, since the aforementioned effects of the present invention are not lost even if the composition contains the organic solvent.

No particular limitation is imposed on the organic solvent usable in the present invention, so long as it is an organic solvent that has conventionally been used in the art. It is desirable to refrain from using an extremely high or low polar solvent (e.g., water or a hydrocarbon solvent such as hexane), since such a solvent may cause, for example, occurrence of a precipitate or phase separation. Care should be taken when adding a large amount of an organic solvent, since a film having a sufficient thickness may fail to be formed.

### [Additional Additive]

The optical waveguide-forming composition of the present invention may contain an additional additive that has conventionally been used in the art, so long as the effects of the present invention are not impaired. Examples of the additional additive include an antireflection agent, an ultraviolet absorber, an antioxidant, a photostabilizer, a sensitizer, a surfactant, a crosslinking agent, a leveling agent, and a silane coupling agent.

When such an additional additive is used, the amount of the additive to be incorporated may be generally 10 parts by mass or less relative to 100 parts by mass of the total mass of the aforementioned epoxy compounds (resin components).

### [Optical Waveguide-Forming Composition]

As described below, the aforementioned optical waveguide-forming composition of the present invention can be suitably used as a material for forming an optical waveguide, in particular, a material for forming a cladding layer of an optical waveguide.

No particular limitation is imposed on the preparation method for the optical waveguide-forming composition of the present embodiment. For example, the optical waveguide-forming composition is prepared by a method wherein the components (A), (B), (C), and (D) are mixed, and, if necessary, an additional epoxy compound or an additional additive is added to the mixture, to thereby prepare a homogeneous solution, or a method wherein a conventional organic solvent is used in addition to these components.

In the optical waveguide-forming composition of the present invention, the amount of each component may be determined as follows. When, for example, the total mass of the epoxy compounds is 100 parts by mass, the amount of the fluorene skeleton-containing epoxy compound (A) may be 10 to 40 parts by mass, the amount of the alicyclic epoxy compound (B) may be 20 to 70 parts by mass, the amount of the aromatic epoxy compound (C) may be 10 to 50 parts by mass, and the amount of an additional epoxy compound may be 0 to 20 parts by mass. The amount of the photoacid generator (D) may be 0.2 to 5 parts by mass, and the amount of an additional additive may be 0 to 10 parts by mass, relative to 100 parts by mass of the total mass of the aforementioned epoxy compounds (resin components).

In the case where the aforementioned organic solvent is used, no particular limitation is imposed on the amount of the solid content of the optical waveguide-forming composition, so long as the respective components are homogeneously dissolved in the organic solvent. The amount of the solid content is, for example, 60% by mass or more, or 70% by mass or more. Preferably, the amount of the solid content of the composition is adjusted to, for example, 75% by mass to 100% by mass. The "solid content" as used herein refers to all components (except for the organic solvent component) contained in the optical waveguide-forming composition.

Preferably, the optical waveguide-forming composition is filtered with, for example, a filter having a pore size of 0.05 to 5 µm before use.

The optical waveguide-forming composition of the present invention has such a viscosity that it can be readily handled for forming an optical waveguide.

For example, the aforementioned optical waveguide-forming composition may have a viscosity of 100 to 10,000 mPa·s at 25°C.

### <<Optical Waveguide>>

The optical waveguide of the present invention includes a cured product of the aforementioned optical waveguide-forming composition, and preferably includes a cladding layer formed of a cured product of the optical waveguide-forming composition.

In one embodiment, the optical waveguide of the present invention may be, for example, an optical waveguide including a core, and a cladding layer surrounding the entire periphery of the core and having a refractive index lower than that of the core, wherein the cladding layer is formed of a cured product of the aforementioned optical waveguide-forming composition. The core may be formed of a material having a refractive index higher than that of the formed cladding layer.

The optical waveguide of the present invention may be any of the following types: graded-index (GI) type wherein the refractive index of the core changes continuously in a radial direction; multistep-index (MI) type wherein the refractive index of the core changes in a stepwise manner in a radial direction; and step index (SI) type wherein the refractive index changes discontinuously only at the interface between the core and the cladding.

### Examples

The present invention will next be described in more detail by way of Examples, but the present invention should not be construed as being limited to the following Examples.

Compounds used in Examples, etc. and the abbreviations, etc. of the compounds are as described below.

### [Fluorene Skeleton-Containing Diepoxy Compound]

CG-500: OGSOL (registered trademark) CG-500, available from Osaka Gas Chemicals Co., Ltd.

PG-100: OGSOL (registered trademark) PG-100, available from Osaka Gas Chemicals Co., Ltd.

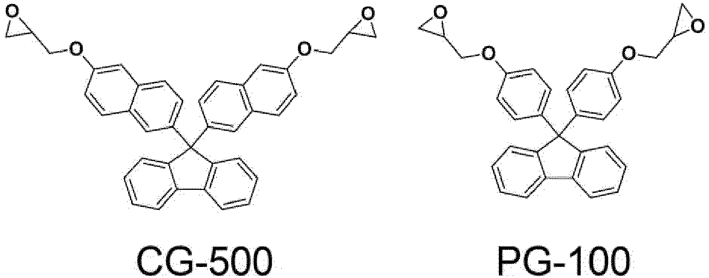

### [Bifunctional Alicyclic Epoxy Compound]

CEL-8010: CELLOXIDE (registered trademark) 8010, available from Daicel Corporation
THI-DE: EPOCHALIC (registered trademark) THI-DE, available from ENEOS Corporation
CEL-2021P: CELLOXIDE (registered trademark) 2021P

### (3',4'-epoxycyclohexylmethyl 3,4-epoxycyclohexane carboxylate), available from Daicel Corporation

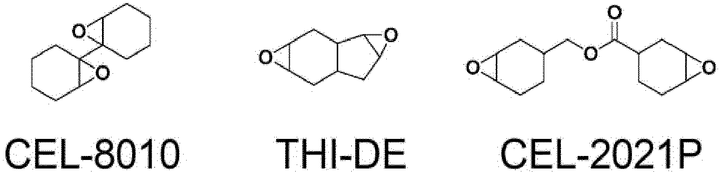

### [Bifunctional Aromatic Epoxy Compound]

jER806: jER (registered trademark) bisphenol F-type epoxy resin, available from Mitsubishi Chemical Corporation
jER828: jER (registered trademark) bisphenol A-type epoxy resin, available from Mitsubishi Chemical Corporation

### [Alternative Bifunctional Epoxy Compound]

YX-8000: hydrogenated bisphenol A-type epoxy resin, available from Mitsubishi Chemical Corporation

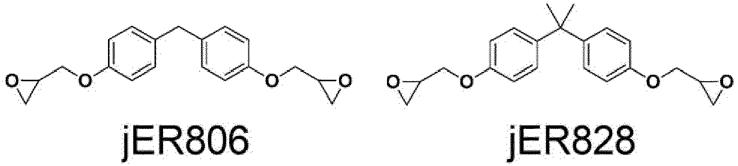

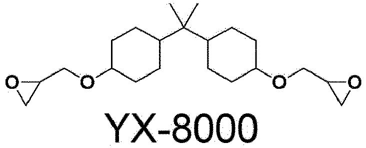

### [Monofunctional Alicyclic Epoxy Compound]

M-100: CYCLOMER (registered trademark) M-100 (3,4-epoxycyclohexylmethyl methacrylate), available from Daicel Corporation

### [Monofunctional Aromatic Epoxy Compound]

EX-141: DENACOL (registered trademark) EX-141 (phenyl glycidyl ether), available from Nagase ChemteX Corporation

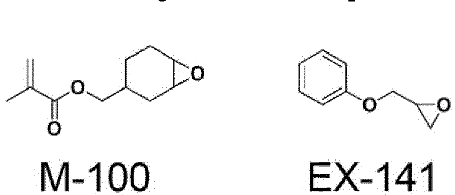

### [Polyfunctional Alicyclic Epoxy Compound]

GT-401: EPOLEAD (registered trademark) GT-401 (ε-caprolactone-modified tetra(3,4-epoxycyclohexylmethyl) butanetetracarboxylate), available from Daicel Corporation

### [Alternative Polyfunctional Epoxy Compound]

EHPE-3150: 1,2-epoxy-4-(2-oxiranyl)cyclohexane adduct of 2,2-bis(hydroxymethyl)-1-butanol, available from Daicel Corporation

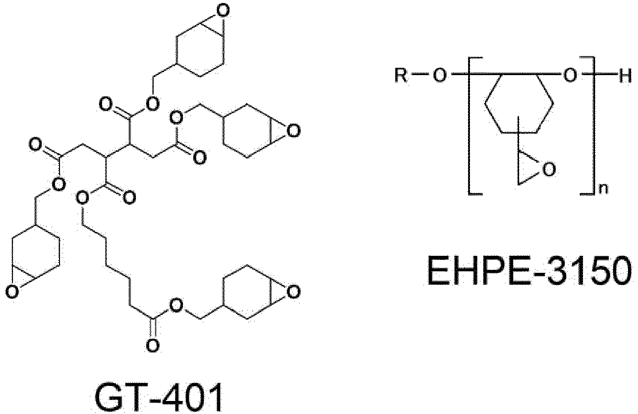

### [Photoacid Generator]

CPI-310FG: triarylsulfonium salt-type photoacid generator, available from San-Apro Ltd.

### [Organic Solvent]

PGMEA: propylene glycol monomethyl ether acetate, available from Showa Denko K.K.

### [Examples 1 to 5 and Comparative Examples 1 to 7]

Epoxy compounds (in amounts shown in Table 1), a photoacid generator (in an amount relative to 100 parts by mass of the epoxy compounds), and, if desired, an organic solvent (in an amount relative to 100 parts by mass of the epoxy compounds) were added to a flask, and the resultant mixture was stirred under heating at 110°C or lower, to thereby completely dissolve the solid components. The resultant product was cooled to room temperature, and then subjected to pressure filtration with a SUS filter having a diameter of 3 µm in a clean room, to thereby prepare a liquid composition.

A round silicon wafer substrate having a diameter of 4 inches was cleaned with a UV/ozone irradiator. The aforementioned composition was added dropwise to the cleaned substrate, and a film was formed by spin coating so as to have a thickness of 20 µm.

The resultant film was subjected to photolithography, to thereby form a patterned cured film. Specifically, the above-formed film was subjected to mask exposure with a mask aligner, and the exposure was performed only on a light-irradiated portion. After the exposure, the resultant film was baked at 60°C for one minute, and then developed for three minutes with an organic solvent; i.e., PGMEA/IPA (2-propanol) (50/50 vol/vol%). Finally, post bake was performed at 100°C for two minutes, to thereby form a patterned cured film.

Each of the compositions was evaluated for film formability during spin coating, patternability of a cured film, refractive index, and storage stability through the procedures described below.

### [1. Film Formability]

The state of the film was observed during spin coating of the composition (visual observation) and after spin coating of the composition (visual observation and microscopic observation) and evaluated according to the evaluation criteria described below. The results are shown in Table 1.
A: No unevenness, no phase separation, and no bright spots (derived from aggregates) are observed in the appearance of the entire film. The film exhibits planarity (thickness: ± 1 µm or less) through observation of a cross section with a microscope.
B: Slight unevenness, phase separation, and bright spots are observed in the film. A slight gradient in film thickness is observed from the center of the film toward the end surface.
C: A homogeneous film cannot be formed, or aggregates are observed in the film.

### [2. Patternability]

The cured film formed through photolithography was observed from an end surface with a microscope, and the film was evaluated for exposure sensitivity (patternability) according to the evaluation criteria described below. The results are shown in Table 1.

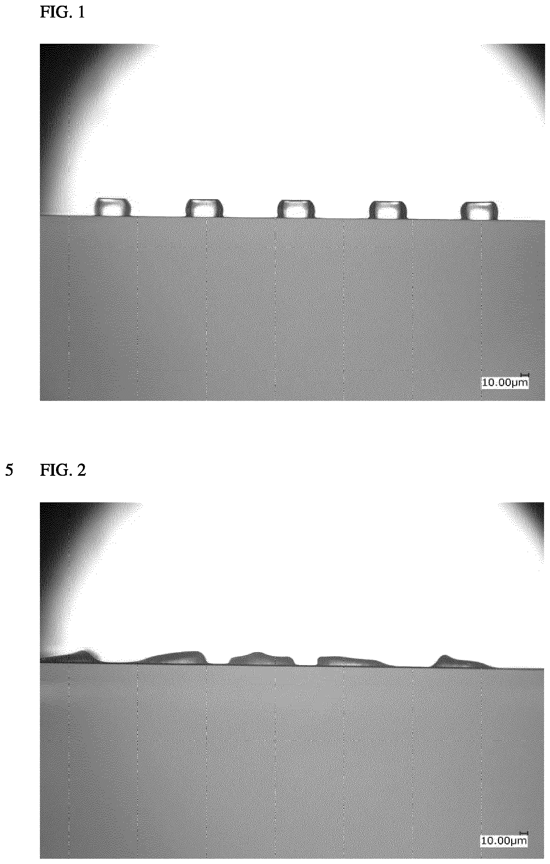

Micrographs of cured films, as observed with a microscope from end surfaces, are shown in FIG. 1 (Example 1) and FIG. 2 (Comparative Example 2).
A: Only an exposed portion is cured, and an unexposed portion is eluted by development with an organic solvent.
B: A pattern is formed to some extent, but an unexposed portion is also slightly cured, or an exposed portion is insufficiently cured, resulting in failure to form a convex pattern.
C: An unexposed portion is considerably cured, or an exposed portion is eluted by development.

### [3. Refractive Index]

The refractive index of each composition at 589 nm was measured with an Abbe's refractometer, and the composition was evaluated according to the evaluation criteria described below. The results are shown in Table 1.
A: The refractive index is 1.54 or more.
C: The refractive index is less than 1.54.

### [4. Storage Stability]

Each composition was stored at room temperature (23 ± 3°C) for one month, and then the state of the composition was visually observed. The composition was evaluated according to the evaluation criteria described below. The results are shown in Table 1.
A: Neither precipitate nor phase separation, etc. is observed, and the composition remains in the form of a transparent homogeneous solution.
B: The liquid becomes slightly turbid, or a precipitate is deposited on the bottom.
C: A precipitate is clearly formed and does not redissolve even when stirred.

**Table 1**

| | | | Example | | | | | Comparative Example | | | | | | |
|---|---|---|---|---|---|---|---|---|---|---|---|---|---|---|
| | | | 1 | 2 | 3 | 4 | 5 | 1 | 2 | 3 | 4 | 5 | 6 | 7 |
| Epoxy compound | Fluorene skeleton-containing | CG-500 | 20 | 20 | 20 | 20 | 20 | 0 | 20 | 40 | 40 | 40 | 40 | 0 |
| | | PG-100 | 0 | 0 | 0 | 0 | 0 | 20 | 0 | 0 | 0 | 0 | 0 | 0 |
| | Bifunctional alicyclic | CEL-8010 | 35 | 35 | 35 | 0 | 0 | 35 | 0 | 0 | 0 | 0 | 0 | 36 |
| | | THI-DE | 0 | 0 | 0 | 35 | 0 | 0 | 0 | 0 | 0 | 0 | 0 | 0 |
| | | CEL-2021P | 0 | 0 | 0 | 0 | 35 | 0 | 0 | 0 | 0 | 23 | 23 | 0 |
| | Bifunctional aromatic | jER806 | 30 | 30 | 0 | 30 | 30 | 30 | 30 | 0 | 0 | 0 | 0 | 49 |
| | | iER828 | 0 | 0 | 30 | 0 | 0 | 0 | 0 | 0 | 0 | 0 | 0 | 0 |
| | Alternative bifunctional | YX-8000 | 0 | 0 | 0 | 0 | 0 | 0 | 35 | 0 | 0 | 0 | 0 | 0 |
| | Monofunctional alicyclic | M-100 | 5 | 5 | 5 | 5 | 5 | 5 | 0 | 5 | 5 | 5 | 5 | 5 |
| | Monofunctional aromatic | EX-141 | 10 | 10 | 10 | 10 | 10 | 10 | 15 | 0 | 0 | 0 | 0 | 10 |
| | Polyfunctional alicyclic | GT-401 | 0 | 0 | 0 | 0 | 0 | 0 | 0 | 23 | 23 | 0 | 0 | 0 |
| | Alternative polyfunctional | EHPE-3150 | 0 | 0 | 0 | 0 | 0 | 0 | 0 | 32 | 32 | 32 | 32 | 0 |
| Total amount of resins (parts) | | | 100 | 100 | 100 | 100 | 100 | 100 | 100 | 100 | 100 | 100 | 100 | 100 |
| Photoacid generator* | | CPI-310FG | 1phr | 1phr | 1phr | 1phr | 1phr | 1phr | 1phr | 1phr | 1phr | 1phr | 1phr | 1phr |
| Organic solvent* | | PGMEA | 0phr | 20phr | 0phr | 0phr | 0phr | 0phr | 0phr | 0phr | 30phr | 0phr | 30phr | 0phr |
| Film formability | | | A | A | A | A | A | C | B | C | A | C | A | A |
| Exposure sensitivity (patternability) | | | A | A | A | A | A | A | C | C | B | C | B | A |
| Refractive index | | | A | A | A | A | A | A | A | A | A | A | A | C |
| Storage stability | | | A | A | A | A | A | C | A | C | B | C | B | A |

| | | | | | | | | | | | | | | |
|---|---|---|---|---|---|---|---|---|---|---|---|---|---|---|
| *: Amount relative to the total amount of resins (100 parts by mass) | | | | | | | | | | | | | | |

As shown in Table 1, the compositions of Examples 1 to 5 exhibited excellent film formability. As also shown in FIG. 1, the compositions exhibited good exposure sensitivity. The results indicated that the compositions exhibit a refractive index of 1.54 or more and excellent storage stability.

In contrast, the results shown in Table 1 and FIG. 2 indicated that the compositions of Comparative Examples 1 to 7 cannot satisfy all of the following requirements: film formability, exposure sensitivity, refractive index, and storage stability.

Specifically, in the case where the fluorene skeleton-containing epoxy compound (A) was not used (Comparative Example 7), the refractive index was lower than that in the Examples. In the case where the fluorene skeleton-containing epoxy compound having a structure different from that of the compound (A) according to the present invention was used (Comparative Example 1), the refractive index was improved, but the film formability and the storage stability were impaired.

In the case where the bifunctional or monofunctional alicyclic epoxy compound (B) was not incorporated (Comparative Example 2), the film formability was impaired, and the exposure sensitivity was poor.

In the case where the bifunctional or monofunctional aromatic epoxy compound (C) was not incorporated, but instead an alternative polyfunctional epoxy compound was incorporated (Comparative Example 5), the film formability, the exposure sensitivity, and the storage stability were impaired. When an organic solvent was added to this composition (Comparative Example 6), the film formability, the exposure sensitivity, and the storage stability were slightly improved, but the results did not reach "rating A" corresponding to the evaluations of the Examples.

In the case where the bifunctional or monofunctional aromatic epoxy compound (C) was not incorporated, but the monofunctional alicyclic epoxy compound (B), a polyfunctional alicyclic epoxy compound, and an alternative polyfunctional epoxy compound were incorporated (Comparative Example 3), the film formability, the exposure sensitivity, and the storage stability were impaired. When an organic solvent was added to this composition (Comparative Example 4), the film formability, the exposure sensitivity, and the storage stability were slightly improved, but the results did not reach "rating A" corresponding to the evaluations of the Examples.

## Claims

1. An optical waveguide-forming composition comprising:
a fluorene skeleton-containing epoxy compound (A) of the following Formula [1]: 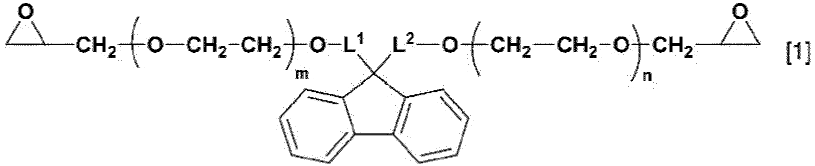 (in Formula [1],
L¹ and L² are each independently a naphthalenediyl group possibly having a substituent; and
m and n are each independently an integer of 0 to 10);
a monofunctional or bifunctional alicyclic epoxy compound (B);
a monofunctional or bifunctional aromatic epoxy compound (C) different from the compound (A); and
a photoacid generator (D).

2. The optical waveguide-forming composition according to claim 1, wherein the alicyclic epoxy compound (B) is a liquid alicyclic epoxy compound.

3. The optical waveguide-forming composition according to claim 1 or 2, wherein the aromatic epoxy compound (C) is a bifunctional aromatic epoxy compound.

4. The optical waveguide-forming composition according to any one of claims 1 to 3, wherein the alicyclic epoxy compound (B) is a bifunctional alicyclic epoxy compound, and the aromatic epoxy compound (C) is a bifunctional aromatic epoxy compound.

5. The optical waveguide-forming composition according to any one of claims 1 to 4, wherein the alicyclic epoxy compound (B) is a compound of the following Formula [2]: 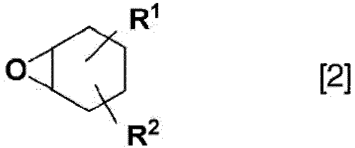 (in Formula [2], R¹ and R² are each independently a hydrogen atom, a linear or branched alkyl group having a carbon atom number of 1 to 6 or a cyclic alkyl group having a carbon atom number of 3 to 6, which possibly has an ester group or an ether group, or a combination of the linear or branched alkyl group and the cyclic alkyl group, wherein the linear alkyl group having a carbon atom number of 2 or more, the branched alkyl group having a carbon atom number of 3 or more, or the cyclic alkyl group possibly forms an epoxy ring together with the adjacent carbon atom, or
R¹ and R² are possibly bonded together to form a C₄₋₆ ring, and possibly form an epoxy ring together with the adjacent carbon atom forming the C₄₋₆ ring).

6. The optical waveguide-forming composition according to any one of claims 1 to 5, wherein the aromatic epoxy compound (C) is an epoxy compound having a bisphenol A skeleton or a bisphenol F skeleton.

7. The optical waveguide-forming composition according to any one of claims 1 to 6, wherein the fluorene skeleton-containing epoxy compound (A) is a compound of the following Formula [3].

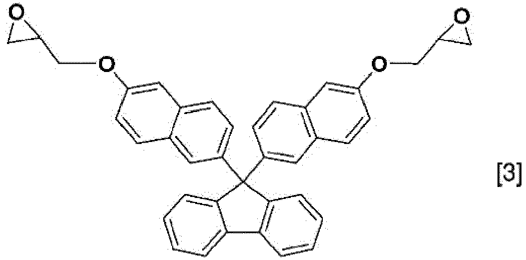

8. The optical waveguide-forming composition according to any one of claims 1 to 7, wherein the alicyclic epoxy compound (B) is at least one of compounds of the following Formulae [4], [5], and [6].

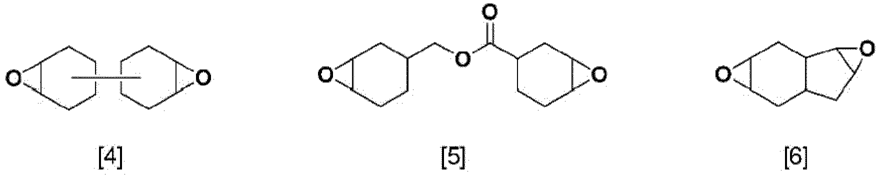

9. A cured product, which is a polymerized product of the optical waveguide-forming composition according to any one of claims 1 to 8.

10. An optical waveguide comprising a cured product of the optical waveguide-forming composition according to any one of claims 1 to 8.

11. The optical waveguide according to claim 10, wherein the optical waveguide comprises a cladding layer formed of a cured product of the optical waveguide-forming composition according to any one of claims 1 to 8.
